(19) Europäisches Patentamt
European Patent Office
Office européen des brevets

(11) Numéro de publication : **0 236 232 B1**

(12) **FASCICULE DE BREVET EUROPEEN**

(45) Date de publication du fascicule du brevet :
27.02.91 Bulletin 91/09

(51) Int. Cl.$^5$ : **A61C 15/02**

(21) Numéro de dépôt : 87400466.6

(22) Date de dépôt : 04.03.87

(54) **Dispositif de nettoyage des dents.**

(30) Priorité : 05.03.86 FR 8603075

(43) Date de publication de la demande :
09.09.87 Bulletin 87/37

(45) Mention de la délivrance du brevet :
27.02.91 Bulletin 91/09

(84) Etats contractants désignés :
BE CH DE ES GB IT LI LU NL SE

(56) Documents cités :
WO-A-85/00101
GB-A- 1 296 543
GB-A- 2 087 729
US-A- 3 779 256
US-A- 4 577 649

(73) Titulaire : **GOOD MARK DISTRIBUTION,
Société Anonyme dite :
10, rue des Oliviers - Senia 331
F-94537 Rungis Cédex (FR)**

(72) Inventeur : **Goodman, Jacob
785 Fifth Avenue
New York N.Y. 10022 (US)**

(74) Mandataire : **Jolly, Jean-Pierre et al
Cabinet Jolly 54, rue de Clichy
F-75009 Paris (FR)**

EP 0 236 232 B1

Jouve, 18, rue Saint-Denis, 75001 PARIS

## Description

La présente invention concerne un dispositif pour le nettoyage des dents.

On utilise depuis de nombreuses années, avec une efficacité variable, de nombreuses variétés de dispositifs de nettoyage des dents. Des dispositifs extrêmement minces, tels que des fils et des bandes dentaires, peuvent être poussés dans de petits espaces entre les dents, tandis qu'on les saisit à l'intérieur et à l'extérieur d'une rangée de dents, pour les tirer d'avant en arrière et réciproquement. De tels dispositifs ne peuvent pas servir de cure-dents, que l'on peut maintenir par une seule extrémité et qui exigent une certaine rigidité, de façon à pouvoir être poussés entre des dents rapprochées.

On connaît aussi des dispositifs en matière plastique pour le nettoyage des dents, qui présentent des faces planes dans lesquelles est noyé un abrasif fin. Ces dispositifs sont inefficaces pour gratter la plaque dentaire et pour déloger certaines particules alimentaires logées entre les dents. L'abrasif pourrait d'ailleurs être dangereux pour l'émail des dents s'il pouvait user la plaque dentaire.

On connaît aussi un outil long et mince ressemblant à un cure-dents, qui présente des surfaces allongées dépolies ou comportant des parties arrondies ou en relief, pour user ou gratter en douceur les corps étrangers présents sur et entre les dents d'un usager. Un tel outil comporte une partie terminale mince présentant un bord longitudinal de raclage, que l'on utilise pour le grattage en faisant tourner la partie mince pendant qu'on la maintient entre deux dents.

US-A-4 577 649 décrit un cure-dents comportant une partie de préhension longitudinale dans le prolongement de laquelle est disposée une partie destinée à être introduite entre les dents, cette partie ayant une section triangulaire et au moins deux faces latérales allongées pouvant présenter des nervures perpendiculaires à la direction longitudinale des faces.

On connaît aussi des outils métalliques minces analogues à une lime, destinés à être montés sur un mandrin et à être entraînés longitudinalement en vibration par un dentiste, lors d'interventions sur le canal de la racine. De tels outils métalliques sont totalement impropres aux usages envisagés par la présente invention.

Enfin, WO 85/00101 décrit un dispositif pour le nettoyage des dents formé d'une seule pièce comprenant, d'une part, une tige mince et allongée apte à pénétrer entre les dents, le matériau constitutif du dispositif étant une matière plastique moulable dont les caractéristiques de ténacité et de rigidité excluent le flambage et la rupture de la tige lorsqu'on la pousse longitudinalement entre les dents, et, d'autre part, un élément de préhension disposé à une extrémité de la tige, asymétriquement par rapport à son axe, la tige comportant trois faces allongées.

Un but de l'invention est, de fournir un dispositif nouveau et peu coûteux pour le nettoyage des dents, destiné à être utilisé par une personne pour nettoyer les surfaces latérales de ses dents et pour retirer des particules d'espaces étroits séparant les dents.

Plus précisément, l'invention vise à fournir un dispositif de nettoyage des dents qui présente des faces allongées, comportant des arêtes ou des indentations pour le nettoyage des dents, le dispositif ayant une section telle que l'usager puisse exercer une pression des arêtes de nettoyage contre une surface latérale d'une de ses dents, tandis qu'il fait aller et venir longitudinalement le dispositif.

Un autre but de l'invention est de fournir un dispositif de nettoyage des dents qui présente une face striée allongée portant de nombreuses arêtes de nettoyage des dents et présentant un élément de préhension dont la forme aide l'usager à choisir et à diriger cette face vers la surface à nettoyer.

L'invention vise enfin à proposer un dispositif qui présente des surfaces striées allongées et dont la section aux sommets des arêtes de nettoyage soit limitée pour pouvoir pénétrer dans les espacements séparant les dents de l'usager sans rendre le dispositif excessivement souple.

A cet effet, l'invention a pour objet un dispositif pour le nettoyage des dents, formé d'une seule pièce, comprenant, d'une part, une tige mince et allongée, à section transversale triangulaire apte à pénétrer entre les dents, le matériau constitutif du dispositif étant une matière plastique moulable dont les caractéristiques de ténacité et de rigidité excluent le flambage et la rupture de la tige lorsqu'on la pousse longitudinalement entre les dents, et, d'autre part, un élément de préhension disposé à une extrémité de la tige, asymétriquement par rapport à son axe, la tige présentant trois faces allongées, ce dispositif étant caractérisé en ce que deux desdites faces sont dentelées et coupent la troisième face de manière à former une crête longitudinale dentelée en face de chacune des faces dentelées, les faces dentelées présentant des arêtes vives en travers, la forme aiguë et la dureté de ces arêtes les rendant efficaces pour racler la plaque dentaire, l'élément de préhension constituant un moyen permettant à l'usager de diriger une face dentelée choisie contre un côté d'une dent et de diriger une crête opposée à cette face contre la surface opposée de la dent contiguë.

Dans l'exemple de réalisation de l'invention qui est représenté par les dessins annexés et qui sera décrit en détail ci-après, le dispositif de nettoyage des dents se présente sous la forme d'une pièce unique moulée en matière plastique résistante, par exemple en nylon, qui comprend, d'une part, une tige présentant des faces allongées qui sont dentelées, de manière à présenter de nombreuses arêtes de nettoyage des dents, et, d'autre part, une partie de préhension pour aider l'usager à diriger la partie de nettoyage des dents contre la surface latérale de la dent à nettoyer. En coupe transversale, la tige présente trois faces allongées disposées suivant un triangle isocèle à grand angle au sommet, spécialement un triangle équilatéral. Deux des trois faces allongées sont divisées en de nombreuses dents. La troisième face est plane, ce qui évite la perte de rigidité que causeraient les incisions de la troisième face, si elle comportait des arêtes de nettoyage des dents, qui entraîneraient une réduction de la section de la tige. En face de chaque face allongée de nettoyage des dents est disposée une crête longitudinale. Cette crête prend appui contre la surface latérale d'une dent et permet d'exercer une pression par la face de nettoyage opposée contre la surface latérale correspondante de la dent voisine.

Du fait de la flexibilité du dispositif, qui est assez mince pour pénétrer dans des espaces étroits, il n'est pas possible d'exercer de pression réelle des arêtes de raclage des dents par une face allongée contre une surface à nettoyer en déformant la partie de préhension du dispositif. Au contraire, comme le dispositif présente une crête en face de chaque face dentelée, une crête peut prendre appui contre une dent pour fournir la force de réaction nécessaire pour presser contre la dent opposée la face de nettoyage des dents du dispositif.

La tige du dispositif a une section transversale qui diminue suivant sa longueur, de sorte qu'elle présente en différents points de sa longueur la section voulue pour pénétrer dans des espaces entre dents de diverses largeurs. La forme effilée permet aussi à la tige de remplir l'espace entre deux dents adjacentes, espace qui varie suivant que la tige occupe des positions situées à des distances différentes de la gencive. La pression mentionnée d'une face de nettoyage contre une dent et la force de réaction de la crête opposée de la tige contre la dent voisine peuvent être engendrées malgré des espacements variables entre dents. Cette qualité de souplesse des crêtes, d'autant plus qu'elle sont dentelées, permet à la tige de s'adapter à divers espacements entre dents, sans que la tige ait tendance à se coincer.

Selon une autre caractéristique de l'invention, le dispositif présente un élément de préhension, qui est asymétrique par rapport à l'axe de la tige, ce qui permet à l'usager d'assurer une coopération efficace d'une face de raclage du dispositif avec une surface latérale des dents qu'il nettoie.

D'autres caractéristiques et avantages de l'invention apparaîtront dans la description détaillée qui va suivre d'une forme de réalisation du dispositif de nettoyage des dents. Dans cette description, qui n'a pas de caractère limitatif, on se référera aux dessins annexés, sur lesquels :

La figure 1 est une vue latérale agrandie du dispositif ;

La figure 2 est une vue de bout par le haut de la figure 1 ;

La figure 3 est une coupe transversale fortement agrandie du dispositif, suivant le plan 3-3 de la figure 1 ;

La figure 4 est une coupe longitudinale partielle fortement agrandie du dispositif des figures 1 à 3, suivant le plan 4-4 de la figure 3 ;

La figure 5 est une vue agrandie du dispositif des figures 1 à 4, en cours d'usage dans un espace entre les dents d'une personne.

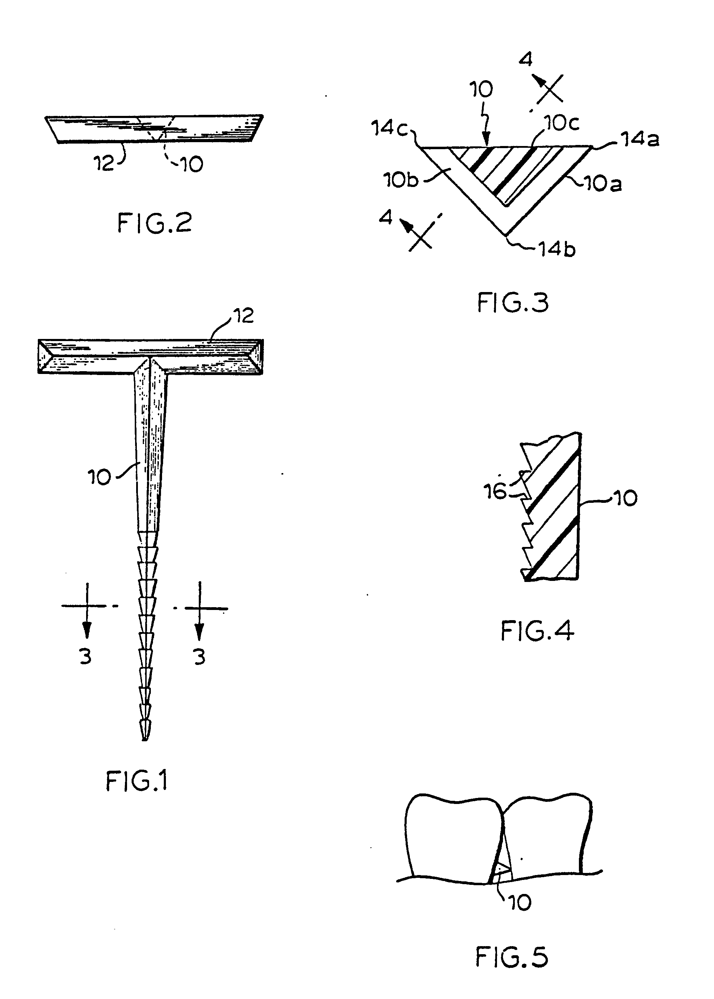

On voit, sur les figures 1 et 2, que la tige allongée 10 comporte une partie de préhension 12 transversale à son axe longitudinal . La section transversale de la tige 10 est un triangle équilatéral, dans l'exemple représenté. Deux faces 10a et 10b sont dentelées et comportent une série d'arêtes de raclage 16. Comme représenté, chaque arête peut avoir, d'un côté, une facette s'inclinant rapidement, sensiblement perpendiculairement à l'axe de la tige et, du côté opposé, une facette ayant une inclinaison progressive. Les arêtes de raclage 16 s'étendent transversalement sur les faces allongées de la tige. Les trois faces allongées pourraient toutes présenter des arêtes de raclage 16, mais, ici, la troisième face 10c est plane et dépourvue d'arêtes de raclage. Des indentations dans la face 10c réduiraient la section du dispositif, de sorte qu'il pourrait être indésirablement souple. L'addition d'indentations sur la face 10c pourrait tendre aussi à accroître la section globale du dispositif, de sorte qu'il serait plus difficile de l'insérer dans des espacements étroits.

L'angle au coin 14b (figure 3), entre les faces dentelées 10a et 10b, est de 60° dans cet exemple. Une limite inférieure serait d'environ 45°. Si l'on rendait cet angle trop petit, la tige se comporterait comme une bande et manquerait de rigidité. Du côté opposé à chaque face dentelée 10a et 10b se trouvent des crêtes 14c et 14a. Quand le dispositif entre dans un espace entre deux dents, l'une de ces crêtes s'applique contre une dent, de manière à assurer une force de réaction pour pousser la face dentelée opposée contre la surface latérale opposée d'une dent à nettoyer. Pour cette fonction, la limite supérieure de l'angle au coin 14b entre les faces 10a et 10b est d'environ 90°.

Comme on le voit sur la figure 5, on peut pousser la tige 10 du dispositif dans l'espace entre des dents contiguës. Une crête de la tige s'applique contre une dent, tandis que la face de nettoyage opposée s'applique contre la surface de la dent opposée. L'élément de préhension 12 aide l'usager à établir cette orientation et à la maintenir, lorsque l'on fait aller et venir le dispositif suivant sa longueur.

L'espacement entre dents contiguës varie suivant la longueur des dents, à des distances différentes de la gencive. La pression de nettoyage des dents d'une face dentelée choisie de la tige et la force de réaction assurée par la crête opposée peuvent être entretenues, tandis que l'on fait monter et descendre le dispositif dans cet espacement, à cause de la forme effilée de la tige. Tandis que l'on fait aller et venir le dispositif suivant sa longueur, on peut aussi le manipuler de manière à le déplacer le long de la surface de dent à nettoyer. Pour que cette manipulation soit efficace, il ne faut pas que le dispositif soit trop flexible et, pourtant, il faut qu'il soit mince, de manière à se loger dans des espaces étroits. La section de la tige représentée est un triangle isocèle. Deux faces latérales allongées sont munies de nombreuses arêtes de raclage 16. Comme indiqué plus haut, un angle de 45 à 90° au sommet du triangle contribue à la rigidité voulue et, en cours d'usage, fournit une crête de réaction efficace en face de chaque face dentelée du dispositif.

L'examen de la crête 14a (figure 3) montre que la crête elle-même est dentelée par suite de l'intersection du plan de la face 10c et des dentelures de la face 10a. La crête dentelée en un matériau résistant assure à la tige un certain degré d'élasticité lorsqu'on la fait aller et venir longitudinalement de façon forcée. La qualité de souplesse des crêtes dentelées 14a et 14c évite la possibilité d'un coincement de la tige dans un espace minimum entre dents.

Les proportions d'un exemple très efficace du dispositif de nettoyage des dents décrit sont les suivantes. La longueur de la tige, de l'extrémité de la tige à l'élément de préhension, est d'environ 38 mm et la longueur de la partie dentelée est d'environ 23 mm. La profondeur d'une gorge, de l'arête de raclage à la racine, est d'environ 0,1 mm. La section du dispositif, aux creux des indentations, est un triangle équilatéral dans cet exemple. La longueur d'un côté de ce triangle va d'environ 0,51 à environ 2,03 mm, depuis un point proche du bout de la tige jusqu'à son extrémité la plus proche de l'élément de préhension. Les arêtes de raclage sont espacées de 0,79 mm.

Diverses matières conviennent aux buts de l'invention. Il faut garder à l'esprit la minceur du coeur. Le dispositif doit être suffisamment rigide pour éviter le flambage, quand on le pousse entre les dents en utilisant une forme modérée. Il doit être résistant, c'est-à-dire non fragile, car, autrement, un petit morceau pourrait se détacher de la partie tenue à la main et rester logé entre les dents. La matière doit être modérément dure, puisque les bords des indentations doivent servir à enlever la plaque par raclage à ses stades précoces de formation et, pourtant, la matière ne doit pas être d'une dureté telle, contrairement à la plupart des métaux, qu'elle use ou mette en danger d'une autre façon l'émail des dents. Enfin, la matière doit être moulable, pour des raisons pratiques.

Quelques matières ayant des propriétés qui répondent à ces conditions sont les nylons et les polypropylènes non chargés de qualité moulable. Diverses propriétés ou caractéristiques physiques de ces matières moulables (et d'autres) sont données par exemple dans Modern Plastics Encyclopedia. La fragilité n'est pas indiquée directement comme une caractéristique donnée. Toutefois, le pourcentage d'allongement (méthode d'essai ASTM D638), qui s'y trouve indiqué, peut servir à distinguer des matières tenaces du polystyrène ordinaire, qui est fragile. Son pourcentage d'allongement est indiqué comme étant de 1,0 à 2,5. Pour éviter la fragilité, la matière doit avoir un pourcentage d'allongement beaucoup plus grand. Le pourcentage d'allongement (avant rupture) d'un nylon ayant une teneur en eau de 2,5% est de 100 à 400 et, même dans le cas d'un nylon à 0,2% d'eau, le pourcentage d'allongement est de 20 à 30. Le pourcentage d'allongement du polypropylène est 200 à 700, aussi bien à l'état non modifié que sous forme de copolymère. D'autres matières plastiques moulables présentent une ténacité convenable.

La dureté apparaît dans Modern Plastics Encyclopedia, sous la forme de la dureté Rockwell, déterminée par la méthode d'essai ASTM D785. La dureté du nylon est de R103 à R119 ; la dureté du polypropylène non modifié est de R85 à R10 et celle du copolymère de propylène est de R50 à R96. Des matières plastiques moulables dures peuvent former des arêtes de raclage. Ces valeurs de dureté contrastent avec les matières caoutchouteuses molles, qui sont incapables de former des arêtes de raclage. La corrélation entre la dureté et la rigidité est faible. Le dispositif de nettoyage des dents décrit, s'il était formé de caoutchouc naturel par exemple, manquerait complètement de la rigidité voulue.

La description détaillée ci-dessus d'un exemple d'exécution de l'invention peut bien entendu être modifiée par l'homme de l'art sans sortir du cadre de l'invention.

## Revendications

1. Dispositif pour le nettoyage des dents, formé d'une seule pièce, comprenant, d'une part, une tige (10) mince et allongée, à section transversale triangulaire apte à pénétrer entre les dents, le matériau constitutif du dispositif étant une matière plastique moulable dont les caractéristiques de ténacité et de rigidité excluent le flambage et la rupture de la tige lorsqu'on la pousse longitudinalement entre les dents, et, d'autre part, un élément de préhension (12) disposé à une extrémité de la tige, asymétriquement par rapport à son axe, la tige (10) présentant trois faces allongées (10a, 10b, 10c), ce dispositif étant caractérisé en ce que deux desdites faces (10a, 10b) sont dentelées et coupent la troisième face de manière à former une crête longitudinale dentelée en face de chacune des faces dentelées, les faces dentelées présentant des arêtes vives en travers, la forme aiguë et la dureté de ces arêtes les rendant efficaces pour racler la plaque dentaire, l'élément de préhension (12) constituant un moyen permettant à l'usager de diriger une face dentelée choisie contre un côté d'une dent et de diriger une crête opposée à cette face contre la surface opposée de la dent contiguë.

2. Dispositif selon la revendication 1, caractérisé en ce que l'élément de préhension (12) est perpendiculaire à l'axe de la tige et s'étend latéralement par rapport à celle-ci.

3. Dispositif selon la revendication 1, caractérisé en ce que la tige (10) est effilée de manière à présenter une section progressivement réduite vers son extrémité libre.

4. Dispositif selon la revendication 1, caractérisé en ce que l'angle entre les deux faces dentelées (10a, 10b) est d'environ 45 à 90°, la troisième face allongée étant exempte d'indentations.

5. Dispositif selon la revendication 4, caractérisé en ce que la tige (10) est effilée de manière à présenter une section progressivement réduite vers son extrémité libre.

6. Dispositif selon la revendication 1, caractérisé en ce qu'il est constitué d'un matériau ayant un pourcentage d'allongement très supérieur à 2,5, selon la méthode d'essai ASTM D638, et une dureté minimale d'environ R50 selon la méthode d'essai ASTM D785.

7. Dispositif selon la revendication 1, caractérisé en ce que les trois faces allongées (10a, 10b, 10c) sont disposées suivant un triangle pratiquement équilatéral, en coupe transversale, et que deux seulement de ces faces sont dentelées.

8. Dispositif selon la revendication 1, caractérisé en ce que la troisième face allongée (10c) de la tige (10) est exempte d'indentations, en vue d'obtenir la minceur souhaitée pour la tige sans souplesse excessive, cette troisième face coupant les deux faces dentelées (10a, 10b) allongées de manière à former des crêtes dentelées qui s'appliquent contre une dent, tandis qu'une face dentelée s'applique contre une dent opposée, pour conférer de la souplesse à la tige et faciliter son usage.

9. Dispositif selon la revendication 7, caractérisé en ce que la troisième face allongée (10c) de la tige (10) est exempte d'indentations et coupe les deux faces dentelées allongées de manière à former une série longitudinale de crêtes dentelées, qui confèrent de la souplesse à la tige et facilitent son usage.

10. Dispositif selon la revendication 1, caractérisé en ce que les arêtes de raclage sont définies individuellement par une paire de surfaces qui se coupent, dont l'une est inclinée et l'autre est sensiblement perpendiculaire relativement à l'axe de la tige.

## Claims

1. A dental cleaning device formed in a single piece and comprising, on the one hand, a thin, elongate shaft (10) with a triangular cross section capable of penetrating between teeth, the material constituting the device being a mouldable plastics material whose characteristics of strength and rigidity exclude buckling and breaking of the shaft when it is pushed longitudinally between the teeth, and, on the other hand, a holding member (12) arranged at one end of the shaft asymmetrically with respect to the axis thereof, the shaft (10) having three elongate faces (10a, 10b, 10c), this device being characterized in that two of said faces (10a, 10b) are serrated and cut the third face so as to form a serrated longitudinal ridge opposite each of the serrated faces, the serrated faces having cross-wise sharp edges, the acute form and hardness of these edges rendering them effective at scraping dental plaque, the holding member (12) providing a means enabling the user to direct a selected serrated face at one side of a tooth and a ridge opposite this face at the opposite surface of the adjoining tooth.

2. A device according to claim 1, characterized in that the holding member (12) is perpendicular to the axis of the shaft and extends laterally with respect thereto.

3. A device according to claim 1, characterized in that the shaft (10) is tapered so as to have a section which diminishes progressively towards its free end.

4. A device according to claim 1, characterized in that the angle between the two serrated faces (10a, 10b) is approximately 45 to 90°, the third elongate face being free of indentations.

5. A device according to claim 4, characterized in that the shaft (10) is tapered so as to have a section which diminishes progressively towards its free end.

6. A device according to claim 1, characterized in that it consists of a material with an elongation percentage very much higher than 2.5, according to ASTM test method D638, and a minimum hardness of approximately R50 according to ASTM testing method D785.

7. A device according to claim 1, characterized in that the three elongate faces (10a, 10b, 10c) are arranged according to a virtually equilateral triangle, in cross section, and in that only two of these faces are serrated.

8. A device according to claim 1, characterized in that the third elongate face (10c) of the shaft (10) is free of indentations, with a view to obtaining the desired shaft thinness without excessive flexibility, this third face cutting the two elongate serrated faces (10a, 10b) so as to form serrated ridges which can be applied to a tooth, while a serrated face is applied to an opposed tooth, to make the shaft flexible and facilitate its use.

9. A device according to claim 7, characterized in that the third elongate face (10c) of the shaft (10) is free of indentations and cuts the two elongate serrated faces so as to form a longitudinal series of serrated ridges, which make the shaft flexible and facilitate its use.

10. A device according to claim 1, characterized in that the scraping edges are individually defined by a pair of surfaces which intersect each other, one of which is inclined and the other of which is substantially perpendicular with respect to the axis of the shaft.

**Ansprüche**

1. Aus einem Stück hergestellte Zahnreinigungsvorrichtung, zum einen mit einem dünnen und länglichen Schaft (10) mit einem dreieckigen Querschnitt, der geeignet ist, zwischen den Zähnen durchzutreten, wobei das Aufbaumaterial der Vorrichtung ein spritzgießbares Kunststoffmaterial ist, dessen Zähigkeits- und Festigkeitseigenschaften das Abknicken und den Bruch des Schaftes ausschließen, wenn der Schaft in Längsrichtung zwischen die zähne eingeschoben wird, und zum anderen mit einem Griffelement (12), das an einem Ende des Schaftes asymmetrisch im Verhältnis zu dessen Achse angeordnet ist, wobei der Schaft (10) drei längliche Flächen (10a, 10b, 10c) darbietet, dadurch gekennzeichnet, daß zwei der FLächen (10a, 10b) gezahnt sind und die dritte Fläche derart schneiden, daß ein längs gezahnter kamm vor jeder gezahnten Fläche geformt wird, wobei die gezahnten Flächen im Querschnitt scharfe Anschläge bieten und die spitze Form und die Festigkeit der Anschläge diese in die Lage versetzt, den Zahnbelag abzuschaben, wobei das Griffelement (12) ein Mittel bildet, das es dem Benutzer gestattet, eine ausgewählte gezahnte Fläche gegen eine Seite eines zahns zu dirigieren und einen Kamm gegenüberliegend dieser Fläche gegen die gegenüberliegende Oberfläche des benachbarten zahnes zu dirigieren.

2. Zahnreinigungsvorrichtung nach Anspruch 1, dadurch gekennzeichnet, daß das Griffelement (12) senkrecht zur Achse des Schaftes ist und sich seitlich im Verhältnis zu diesem erstreckt.

3. Zahnreinigungsvorrichtung nach Anspruch 1, dadurch gekennzeichnet, daß der Schaft (10) derart zugespitzt ist, daß er einen zu seinem freien Ende hin mehr und mehr verminderten Querschnitt bietet.

4. Zahnreinigungsvorrichtung nach Anspruch 1, dadurch gekennzeichnet, daß der Winkel zwischen den zwei gezahnten Flächen (10a, 10b) ungefähr 45 bis 90° ist und die dritte Fläche langgestreckt ist und keine Zahnungen aufweist.

5. Zahnreinigungsvorrichtung nach Anspruch 4, dadurch gekennzeichnet, daß der Schaft (10) derart zugespitzt ist, daß er einen zu seinem freien Ende hin nach und nach verminderten Querschnitt bietet.

6. Zahnreinigungsvorrichtung nach Anspruch 1, dadurch gekennzeichnet, daß er aus einem Material besteht, das einen Längsdehnungsprozentsatz von erheblich mehr als 2,5 nach der Versuchsmethode ASTM D638 und eine minimale Festigkeit um R50 nach der Versuchsmethode ASTM D785 hat.

7. Zahnreinigungsvorrichtung nach Anspruch 1, dadurch gekennzeichnet, daß die drei langgestreckten Flächen (10a, 10b, 10c) in einem im Querschnitt praktisch gleichseitigen Dreieck angeordnet sind und daß nur zwei der Flächen gezahnt sind.

8. Zahnreinigungsvorrichtung nach Anspruch 4, dadurch gekennzeichnet, daß die dritte langgestreckte Fläche (10c) des Schaftes (10) von Zahnungen ausgenommen ist, im Hinblick darauf, den gewünschten dünnen Aufbau für den Schaft ohne außerordentliche Weichheit zu erhalten, wobei diese dritte Fläche die zwei gezahnten langgestreckten Flächen (10a, 10b) derart schneidet, daß gezahnte Kämme gebildet werden, die auf einen Zahn wirken, während eine gezahnte Fläche auf einen gegenüberliegenden Zahn wirkt, um die Weichheit des Schaftes zu gewährleisten und seine Verwendung zu erleichtern,

9. Vorrichtung nach Anspruch 7, dadurch gekennzeichnet, daß die dritte längliche Fläche (10c) des Schaftes (10) von Zahnungen ausgenommen ist und die zwei gezahnten langgestreckten Flächen derart schneidet, daß eine Längsreihe von gezahnten Kämmen erzeugt wird, die die Weichheit des Schaftes gewährleisten und seine Verwendung erleichtern.

10. Zahnreinigungsvorrichtung nach Anspruch 1, dadurch gekennzeichnet, daß die Anschläge für das Abschaben je einzeln durch ein Paar von Oberflächen festgelegt sind, die sich schneiden, von denen eine geneigt ist und die andere im wesentlichen senkrecht relativ zur Achse des Schaftes angeordnet sind.

FIG.2

FIG.3

FIG.1

FIG.4

FIG.5